# FASCICULE DE BREVET EUROPEEN

(11) **EP 1 033 506 B1**
(45) Date de publication et mention de la délivrance du brevet: **18.08.2004**
(21) Numéro de dépôt: 00400561.7
(22) Date de dépôt: 02.03.2000
(51) Int. Cl.: F16F 1/377

(54) **Agencement structurel réducteur de choc**
Stossdämpfend wirkende Struktur
Shock absorbing structure

(30) Priorité: 04.03.1999 FR 9902684
(43) Date de publication de la demande: 06.09.2000
(73) Titulaire: ALCATEL, 75008 Paris (FR)
(72) Inventeur: Brevart, Bertrand, 31000 Toulouse (FR); Youssefi, Thierry, 31600 Labastidette (FR); Bodin, Emmanuel, 49300 Cholet (FR)
(74) Mandataire: Smith, Bradford Lee

(56) Documents cités:
- DE-A- 3 431 776
- FR-A- 2 212 011
- US-A- 5 041 472
- US-A- 5 102 107

## Description

L'invention concerne les agencements structurels qui incorporent des éléments de support à cellules en nid d'abeille, pour des équipements d'ensembles matériels soumis à des chocs. Elle concerne plus particulièrement ceux où il est nécessaire de réduire le niveau de choc transmis depuis une source à au moins un équipement au travers de l'agencement.

Comme il est connu, certains ensembles matériels, tels que des satellites ou leurs lanceurs, sont susceptibles d'inclure des équipements relativement fragiles dont le fonctionnement peut être perturbé plus ou moins gravement par des chocs leur parvenant par l'intermédiaire de la structure matérielle qui les portent. Ceci est notamment le cas lorsque les chocs proviennent de sources portées par une telle structure. Or il n'est pas toujours possible d'éloigner suffisamment les sources de choc des équipements à protéger, tant dans le cas des petits satellites, dits mini et microsatellites, que dans celui des gros satellites qui comportent un nombre élevé d'équipements.

Comme il est connu, les satellites et lanceurs comportent souvent de nombreux mécanismes, notamment pyrotechniques, qui permettent d'allumer, mouvoir, développer, séparer ou activer des éléments divers d'équipement et qui sont la source d'importants chocs. Tels sont notamment les mécanismes de découpe des lanceurs ou encore les systèmes de gerbage des charges utiles qui tendent à être de plus en plus puissants. Ceci conduit donc à rechercher des solutions permettant de réduire les niveaux de choc auxquels sont susceptibles d'être soumis les ensembles et plus particulièrement leurs équipements sensibles aux chocs.

Il est possible de définir des structures relativement complexes qui induisent une atténuation des chocs au niveau des liaisons dans la structure matérielle porteuse d'un ensemble qui comporte le support d'un équipement, lorsque cet équipement est à protéger du fait de sa sensibilité aux chocs Toutefois, l'étude de telles structures est rarement entreprise dans la mesure où elle doit être faite au cas par cas et où il est difficile de réaliser une modélisation appropriée.

La tendance actuelle est d'essayer d'atténuer les chocs au niveau de leur source par exemple en y incorporant un matériau élastomère mis en place pour absorber une partie des ondes de choc. Une limitation de puissance de choc dans un rapport 2 au-delà de 1000 Hz, est par exemple obtenue par ce moyen, dans le cas d'un sous-système satellisé de dégerbage d'antenne et de panneaux solaires.

Il n'est apparemment pas connu de procédé réellement efficace d'atténuation de chocs qui agisse sur le chemin de propagation des ondes de choc et notamment au plus près des équipements à protéger.

Il est connu par ailleurs d'incorporer des supports à structure en nid d'abeilles à des fins de gain de poids dans des ensembles embarqués et plus particulièrement satellisés. Ces supports sont exploités pour monter divers équipements, y compris ceux qui constituent des sources de choc, et notamment des mécanismes pyrotechniques, tels qu'évoqués plus haut.

L'invention propose donc un agencement structurel destiné à assurer une réduction du niveau de choc transmis depuis une source à au moins un équipement dans un ensemble matériel où l'agencement incorpore un ou des éléments de support, à cellules en nid d'abeilles, portant l'équipement à protéger des chocs et/ou la source, caractérisé en ce que ledit ou au moins l'un desdits éléments de support est rempli de microgranules rigides en contact de manière à ce que les ondes vibratoires des chocs et/ou de la source soient atténuées par les frottements générés par la mise en glissement des microgranules les uns sur les autres.

Ainsi, les microgranules sont libres de bouger, de glisser, de frotter et ce sont ces phénomènes qui créent l'atténuation des ondes vibratoires qui se propagent dans la structure lors de chocs pyrotechniques.

Selon une caractéristique de l'invention, cet agencement comporte au moins un élément de support ayant des cellules en nid d'abeilles qui sont remplies de microgranules rigides.

Selon une caractéristique d'une première variante, l'agencement comporte au moins un élément de support incluant des cellules en nid d'abeilles remplies de microgranules qui est monté entre un élément portant une source de choc et un élément portant un équipement à protéger des chocs.

Selon une caractéristique d'une seconde variante, l'agencement comporte au moins un équipement à protéger des chocs et/ou une source de choc monté(e), ou montés, sur un élément de support dont les cellules sont remplies de microgranules.

Selon une caractéristique d'une troisième variante, l'agencement comporte au moins un élément de support à cellules en nid d'abeilles ayant des cellules remplies de microgranules dans une zone ou plusieurs zone(s) délimitée(s) constituée(s) chacune d'une partie principale, au droit de laquelle est monté un équipement à protéger, et d'une extension périphérique qui borde extérieurement cette partie principale.

Selon une caractéristique d'une quatrième variante, l'agencement comporte au moins un élément de support à cellules en nid d'abeilles ayant des cellules remplies de microgranules dans une zone ou plusieurs zone(s) délimitée(s) constituée(s) chacune d'une partie principale, au droit de laquelle est montée une source, et d'une extension périphérique qui borde cette partie principale.

Selon un mode de réalisation, dans l'agencement structurel de l'invention, les microgranules rigides remplissant les cellules en nid d'abeille sont tassés et n'ont pas la possibilité de jeu au sein de l'élément de support.

Selon un mode de réalisation, dans l'agencement structurel de l'invention, les microgranules rigides remplissant les cellules en nid d'abeille sont formés de microsphères creuses, éventuellement réalisées en verre.

L'invention, ses caractéristiques et ses avantages sont précisés dans la description qui suit en liaison avec les figures évoquées ci-dessous.

La figure 1 présente un exemple simplifié d'agencement structurel de support pour ensemble matériel, selon l'invention.

La figure 2 présentent deux diagrammes montrant les temporels des accélérations dues à un choc de référence qui sont mesurées à l'extrémité de deux poutres, l'une à cellules vides et l'autre selon l'invention.

La figure 3 présente un diagramme comportant deux courbes qui montrent les spectres de réponse au chocs des accélérations, dues à un choc de référence, qui sont mesurées à l'extrémité de deux poutres, l'une à cellules vides et l'autre selon l'invention.

Les figures 4, 5 et 6 montrent trois exemples de réalisation d'agencement structurel selon l'invention.

L'agencement structurel selon l'invention est notamment destiné à être mis en oeuvre pour protéger contre les chocs un, des ou les équipements d'un ensemble qui est par exemple un satellite, un lanceur ou un autre aéronef.

Comme déjà indiqué plus haut, il est classiquement prévu des mécanismes produisant principalement ou accessoirement des chocs et en particulier des mécanismes pyrotechniques dans les ensembles matériels tels qu'évoqués ci-dessus. Ces mécanismes sont de plus en plus généralement amenés à voisiner avec les autres équipements de l'ensemble qui les comporte et que l'on cherche le plus souvent à concentrer dans un espace le plus réduit possible. Or certains des équipements, notamment électroniques, peuvent être relativement fragiles et l'on recherche donc à limiter les niveaux de choc qui leur sont transmis. Lorsqu'un mécanisme constituant une source de choc et un équipement, que l'on veut protéger, font partie d'un même ensemble matériel, ils sont généralement portés par l'intermédiaire d'une structure de support, commune à tout ce qui forme l'ensemble, ou plus particulièrement par un agencement structurel qui constitue une partie de cette structure commune de support.

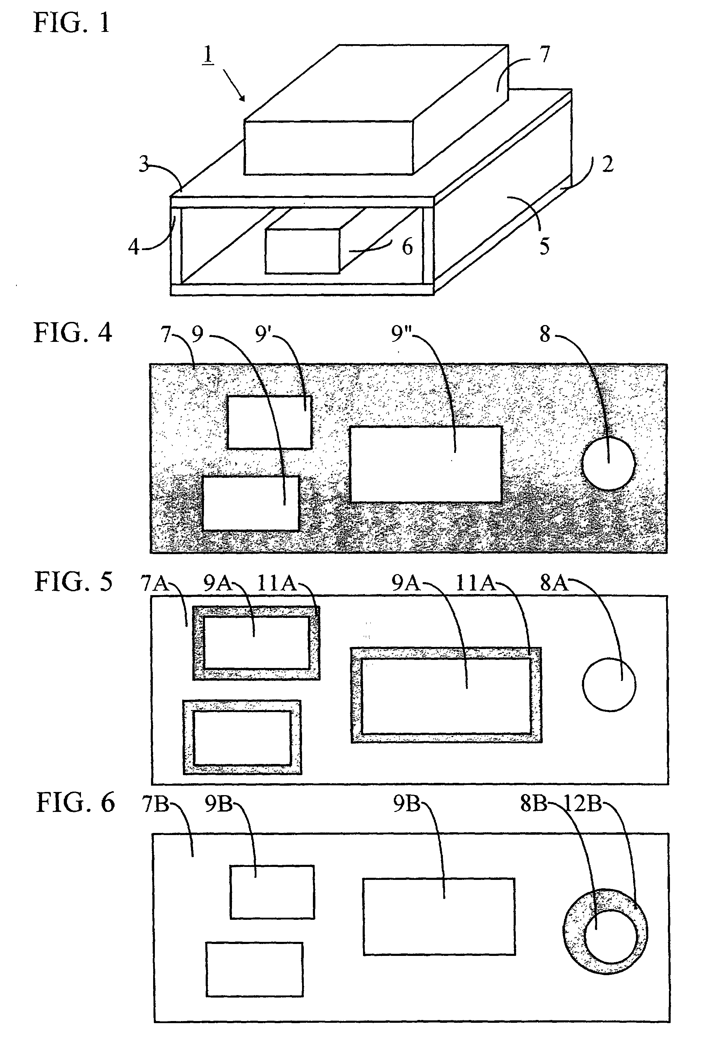

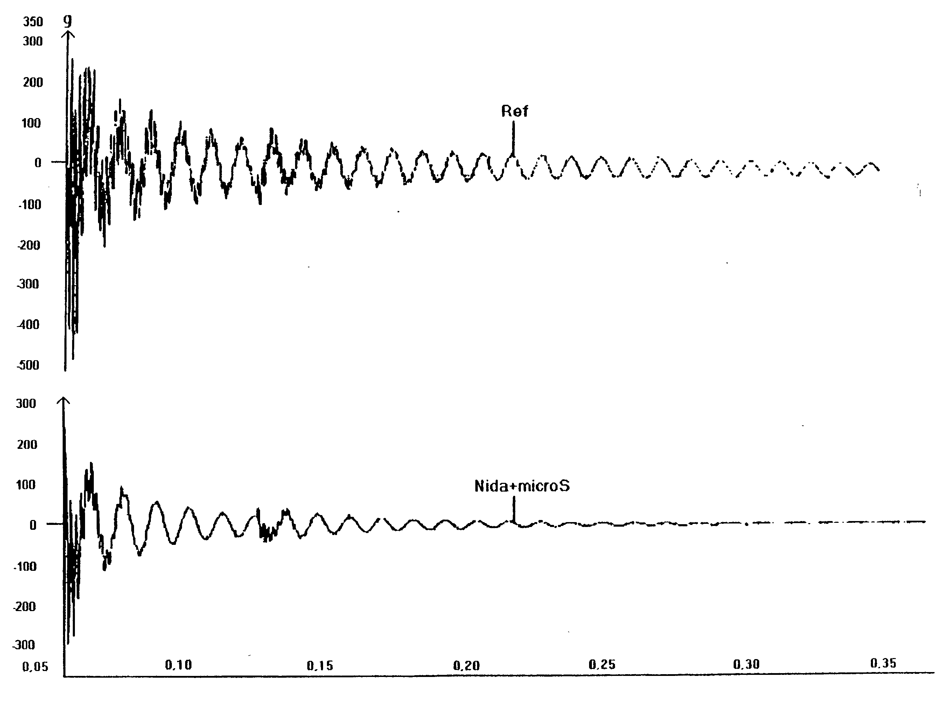

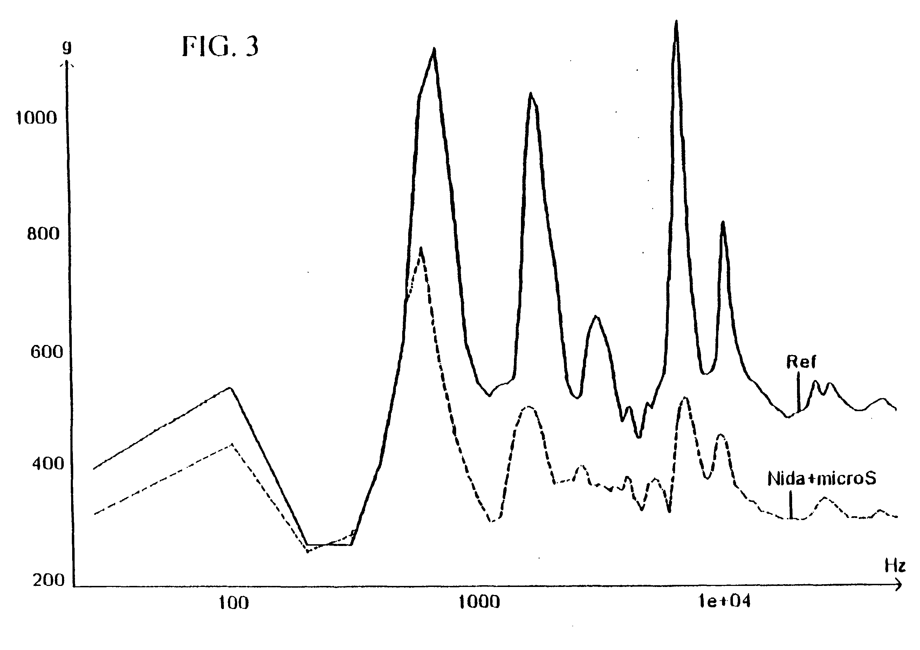

Un exemple d'un tel agencement structurel 1 est schématisé sur la figure 1, il est supposé constitué d'éléments de support 2, 3, 4, 5, ici assemblés sous la forme d'un caisson. Ce dernier comporte un niveau inférieur où est monté un mécanisme constituant une source de choc 6, par exemple un poussoir, une vanne, un système de découpe. Un équipement 7 est supposé placé au niveau supérieur du caisson et il reçoit tout choc transmis au caisson par la source. Dans l'exemple schématique proposé cette transmission s'effectue de la source 6 à l'équipement 7, via les éléments de support 2 à 5. Comme il est courant en ce domaine, au moins certains des éléments de support de l'agencement structurel 1 sont susceptibles d'être réalisés sous la forme de panneaux, en nid d'abeilles, constitués chacun d'une structure cellulaire métallique, usuellement plane, dont les cellules jointivement disposées sont fermées à au moins une de leurs extrémités par une fine plaque, par exemple métallique, formant une peau qui les recouvre.

Les courbes référencées "Ref" des figures 2 et 3 montrent respectivement le temporel et le spectre de réponse au choc des accélérations mesurées à l'extrémité non encastrée d'un élément de support encastré, de type poutre rectangulaire, soumis à un choc demi-sinus à 800 g et de durée 0,3 ms. Cet élément est ici supposé être une poutre en aluminium dont les cellules en nid d'abeilles disposées verticalement sont fermées par une fine plaque, dite peau, à chacune de leurs extrémités. Pour les essais effectués, un encastrement a été réalisé sur une longueur de trente millimètres, à une extrémité de la poutre dont les dimensions sont de 300x30x10 millimètres.

Pour réduire le niveau de choc transmis par une telle poutre, il est prévu de remplir les cellules en nid d'abeilles au moyen de microgranules, rigides, à faible densité rigides. Pour des raisons de gain de poids ces microgranules peuvent être réalisés sous la forme de microgranules creux qui sont placés dans chaque cellule fermée à une extrémité par une première peau. Dans une forme de réalisation, les microgranules sont tassés et n'ont pas de possibilité de jeu, dès que les cellules ont été fermées à leur autre extrémité par une seconde peau. Ce tassement privilégie le frotement entre les microsphères lors du passage des ondes et permet ainsi d'améliorer encore l'atténuation souhaitée.

Les microgranules sont par exemple réalisés sous la forme de microsphères creuses éventuellement réalisées en verre pour présenter une bonne rigidité. La masse spécifique obtenue avec ce matériau de remplissage est couramment de l'ordre 100 à 200 kg/m³. Dans une forme préférée de réalisation, il est prévu un matériau de remplissage constitué de microgranules dont les caractéristiques dimensionnelles sont hétérogènes, avec par exemple une dimension maximale de l'ordre de 500 microns. Une dimension minimale est aussi susceptible d'être prévue. Elle est par exemple choisie supérieure aux microperforations, de l'ordre de 100 microns, classiquement présentes dans les parois des cellules en nid d'abeilles, de manière à éviter toute possibilité de déplacement de microgranules d'une cellule à une autre. Il est aussi possible d'assurer un confinement des plus petites microgranules dans une cellule de nid d'abeilles à une autre par d'autres moyens, par exemple par interposition d'une mousse à alvéoles ouvertes.

Les courbes référencées "Nida+microS" des figures 2 et 3 montrent respectivement le temporel et le spectre de réponse au choc des accélérations mesurées à l'extrémité d'un élément de support dans les conditions décrites plus haut. Cet élément est supposé de structure identique au précédent, il a par contre ses cellules remplies de microsphères de verre dans les conditions prévues selon l'invention. Dans l'exemple envisagé, le remplissage occasionne une augmentation de la masse de l'élément de support de l'ordre de 25%, il entraîne aussi une évolution du maximum temporel de l'accélération mesurée qui passe de 500 à 300g, comme on le voit en comparant les courbes "Ref" et "Nida+microS" sur la figure 2. Une atténuation du spectre de réponse au choc est pratiquement obtenue à toutes les fréquences avec une efficacité particulière de l'ordre de 6dB entre 1000 et 10000 Hz.

L'invention permet la réalisation d'agencements structurels dans lesquels sont prévus un ou plusieurs éléments de support à cellules en nid d'abeilles remplies de microgranules rigides et éventuellement creux. Comme indiqué plus haut dans une forme particulière de réalisation ces microgranules sont tassés, sans jeu, à l'intérieur des cellules.

Dans le cas de la figure 1 il est envisageable de réaliser l'agencement structurel 1 en employant un panneau 3, à cellules en nid d'abeilles remplies de microgranules, pour porter l'équipement 7 à protéger et/ou un autre panneau 2, à cellules en nid d'abeilles remplies de microgranules, pour porter le mécanisme constituant la source de choc 6. L'équipement et la source de choc y sont supposés montés sur des éléments de support intermédiaires appartenant à ce même agencement structurel 1. Il est aussi envisageable d'employer des éléments de support intermédiaires 4 et 5, à cellules en nid d'abeilles remplies de microgranules, pour faire fonction d'entretoises entre les éléments de support 2 et 3 de l'agencement structurel.

De nombreuses variantes de réalisation sont envisageables en fonction des besoins et des contraintes pour les agencements structurels, suivant les positions respectives du ou des équipements à protéger et de la ou des sources de choc.

Les figures 4 à 6 présentent des agencements structurels ou au moins une source de choc et au moins un équipement à protéger sont montés sur un même élément de support 7, 7A ou 7B, ayant des cellules, en nids d'abeilles, remplies de microgranules, comme défini ci-dessus.

Dans une première forme de réalisation illustrée sur la figure 4, il est prévu que toutes les cellules en nid d'abeilles d'un tel élément de support 7 sont identiquement remplies de microgranules, rigides et par exemple creux, dont les dimensions extérieures sont préférablement hétérogènes et comprises entre deux valeurs limites déterminées. Un mécanisme constituant une source de choc 8 est supposé monté sur l'élément de support 7, préférablement à une des extrémités de ce support. Des équipements 9, 9' et 9" sont également montés sur cet élément 7 et ils reçoivent les chocs qui lui sont transmis par la source 8. Ces chocs leur parviennent donc principalement au travers des cellules remplies de microgranules qui assurent une réduction du niveau de choc transmis aux équipements.

Dans les deux formes de réalisation respectivement illustrées sur les figures 5 et 6, il est prévu que seules certaines des cellules en nid d'abeilles de l'élément de support 7A ou 7B sont remplies de microgranules. Les autres cellules sont laissées vides dans la mesure où les premières suffisent à obtenir la diminution de niveau de choc qui est recherchée pour le ou les équipements à protéger. Ceci permet donc de limiter la surcharge pondérale entraînée par le remplissage des cellules.

Dans l'exemple illustré sur la figure 5, seules sont remplies de microgranules, les cellules situées dans une zone amortissante de l'élément de support 7A qui est constituée d'une partie principale au droit de laquelle est monté un équipement 9A à protéger et d'une extension périphérique 11A qui borde extérieurement cette partie principale.

Dans l'exemple présenté, il est supposé que l'élément de support ne comporte qu'une source de choc 8A et trois équipements 9A, distincts, à protéger des ondes de choc transmises par l'élément de support depuis la source de choc. Une zone amortissante individuelle, composée d'une partie principale et d'une extension périphérique, est alors aménagée pour chaque équipement 9A sur l'élément de support 7A. Seule l'extension périphérique 11A, représentée en grisé, de chaque zone amortissante est illustrée sur la figure 5, dans la mesure où la partie principale correspondante est cachée par l'équipement qu'elle porte.

Chaque zone amortissante composée de cellules remplies de microgranules est donc séparée par des cellules vides de tout autre zone amortissante du même élément support. La solution proposée ci-dessus convient aussi, si plusieurs équipements, montés chacun au droit d'une zone intermédiaire à cellules remplies de microgranules d'un élément de support, sont à protéger de plusieurs sources dont les ondes de choc sont susceptibles de se transmettre aux équipements, via leur élément de support.

Dans l'exemple illustré sur la figure 6, il est plus particulièrement prévu la prise en compte individuelle d'une source de choc 8B portée par un élément de support 7B, à cellules en nid d'abeilles, sur lequel sont également montés plusieurs équipements 9B, dont au moins l'un est à protéger.

Une zone amortissante est alors aménagée pour la source de choc 8B sur l'élément de support 7B par remplissage des cellules, au moyen de microgranules, dans une partie de cet élément. De même que précédemment, cette zone amortissante est constituée d'une partie principale, au droit de laquelle est montée la source de choc 8B, et d'une extension périphérique 12B qui borde extérieurement cette partie principale.

L'un des avantages des solutions prévoyant une ou des zones amortissantes, telles que définies ci-dessus, est de limiter au maximum la surcharge pondérale entraînée par le remplissage des cellules.

Le remplissage, sélectif ou global, d'un élément de support composé de cellules en nid d'abeilles, au moyen de microgranules, présente l'avantage de partitionner le volume de matériau exploité à des fins d'amortissement en un grand nombre de volumes élémentaires pratiquement indépendants les uns des autres. La réduction de niveau de choc obtenue est la conséquence de la mise en jeu de phénomènes complexes relatifs notamment au comportement fluide du milieu, au couplage fluide-structure, à l'absorption du milieu granulaire, aux frottements secs et aux non-linéarités. A tout ceci s'ajoute aussi les ruptures d'impédance dans le cas d'éléments de support dont le remplissage est localisé.

L'un des avantages procurés par l'invention est de permettre une approche dite parallèle, par rapport à l'approche série associée à l'usage d'un élastomère intermédiaire. Il n'y a pas de modification de la rigidité de l'élément de support et de l'agencement structurel qui le comporte. Il n'y a pas non plus d'intrusion supplémentaire du au remplissage des cellules, puisque ce remplissage n'occupe que des volumes, jusqu'alors inutilisés.

## Revendications

1. Agencement structurel destiné à assurer une réduction du niveau de choc transmis depuis une source (6, 8, 8A, 8B) à au moins un équipement (7,9, 9', 9")) dans un ensemble matériel où l'agencement incorpore un ou des éléments de support (2, 3, 4, 5, 7, 7A) à cellules en nid d'abeilles portant l'équipement à protéger des chocs et/ou la source, **caractérisé en ce que** ledit ou au moins l'un desdits éléments de support (2, 3, 4, 5) est rempli de microgranules rigides en contact de manière à ce que les ondes vibratoires des chocs et/ou de la source soient atténuées par les frottements générés par la mise en glissement des microgranules les uns sur les autres.

2. Agencement structurel, selon la revendication 1, dans lequel au moins un élément de support (4, 5), comportant des cellules en nid d'abeilles remplies de microgranules, est monté entre un élément (2) portant une source de choc et un élément (3) portant un équipement à protéger des chocs.

3. Agencement structurel, selon la revendication 1, qui comporte au moins l'équipement (9, 9' ou 9") à protéger des chocs et/ou une source de choc (8) monté(e), ou montés, sur l'élément de support (7) supportant également la source de choc dont les cellules sont remplies de microgranules.

4. Agencement structurel, selon la revendication 1, dans lequel au moins l'élément de support (7A) à cellules en nid d'abeilles comporte des cellules remplies de microgranules dans une zone ou plusieurs zones délimitées constituées chacune d'une partie principale au droit de laquelle est monté un équipement à protéger (9A) et d'une extension périphérique (11A) qui borde extérieurement cette partie principale.

5. Agencement structurel, selon la revendication 1, dans lequel au moins l'élément de support (7A) à cellules en nid d'abeilles comporte des cellules remplies de microgranules dans une zone ou plusieurs zones délimitées constituées chacune d'une partie principale au droit de laquelle est montée une source (8B) et d'une extension périphérique (12B) qui borde cette partie principale.

6. Agencement structurel, selon l'une des revendications 1 à 5, dans lequel les microgranules rigides remplissant les cellules en nid d'abeille ont des caractéristiques dimensionnelles hétérogènes.

7. Agencement structurel, selon l'une des revendications 1 à 5, dans lequel les microgranules rigides remplissant les cellules en nid d'abeille sont tassés et n'ont pas la possibilité de jeu au sein de l'élément de support.

8. Agencement structurel, selon l'une des revendications 1 à 7, dans lequel les microgranules rigides remplissant les cellules en nid d'abeille sont formés de microsphères creuses, éventuellement réalisées en verre.

## Patentansprüche

1. Strukturelle Anordnung zur Verringerung der Intensität von Stößen, die von einer Quelle (6, 8, 8A, 8B) auf mindestens ein Gerät (7, 9, 9', 9") in einer Hardware-Baugruppe übertragen werden, wobei die Anordnung eines oder mehrere Trägerelemente (2, 3, 4, 5, 7, 7A) aus Wabenzellen beinhaltet, die das gegen Stöße zu schützende Gerät und/oder deren Quelle trägt, **dadurch gekennzeichnet, daß** die besagten Trägerelemente (2, 3, 4, 5) oder eines davon derart mit sich berührenden starren Mikrokörnchen gefüllt ist, daß die Schwingungswellen der Stöße und/oder der Quelle durch die Reibungskräfte gedämpft werden, die durch die Verschiebung der Mikrokörnchen gegeneinander hervorgerufen werden.

2. Strukturelle Anordnung gemäß Anspruch 1, in welcher mindestens ein Trägerelement (4, 5), welches mit Mikrokörnchen gefüllte Wabenzellen beinhaltet, zwischen einem Element (2), das eine Stoßquelle trägt, und einem Element (3), das ein gegen Stöße zu schützendes Gerät trägt, montiert ist.

3. Strukturelle Anordnung gemäß Anspruch 1, die mindestens das gegen Stöße zu schützende Gerät (9, 9', 9") und/oder eine Stoßquelle (8), welche auf dem Trägerelement (7) montiert sind, beinhaltet und außerdem die Stoßquelle trägt, wobei die Zellen mit Mikrokörnchen gefüllt sind.

4. Strukturelle Anordnung gemäß Anspruch 1, in welcher mindestens das Wabenzellen-Trägerelement (7A) Zellen beinhaltet, die in einer Zone oder mehreren begrenzten Zonen, welche jeweils aus einem Hauptteil, in welchem ein zu schützendes Gerät (9A) montiert ist, und einer außen an diesen Hauptteil angrenzenden peripheren Erweiterung (11A) besteht, mit Mikrokörnchen gefüllt sind.

5. Strukturelle Anordnung gemäß Anspruch 1, in welcher mindestens das Wabenzellen-Trägerelement (7A) Zellen beinhaltet, die in einer Zone oder mehreren begrenzten Zonen, welche jeweils aus einem Hauptteil, in welchem eine Quelle (8B) montiert ist, und einer außen an diesen Hauptteil angrenzenden peripheren Erweiterung (12B) besteht, mit Mikrokörnchen gefüllt sind.

6. Strukturelle Anordnung gemäß einem oder mehreren der Ansprüche 1 bis 5, in welcher die starren Mikrokörnchen, mit denen die Wabenzellen gefüllt sind, heterogene Abmessungen aufweisen.

7. Strukturelle Anordnung gemäß einem oder mehreren der Ansprüche 1 bis 5, in welcher die starren Mikrokörnchen, mit denen die Wabenzellen gefüllt sind, dicht gepackt sind und innerhalb des Trägerelements kein Spiel untereinander haben können.

8. Strukturelle Anordnung gemäß einem oder mehreren der Ansprüche 1 bis 7, in welcher die starren Mikrokörnchen, mit denen die Wabenzellen gefüllt sind, aus hohlen und gegebenenfalls aus Glas hergestellten Mikrokügelchen bestehen.

## Claims

1. A structure for reducing shock transmitted from a source (6, 8, 8A, 8B) to an equipment unit (7, 9, 9' 9") in a hardware system, which structure includes one or more honeycomb cellular support member(s) (2, 3, 4, 5, 7, 7A) carrying the equipment unit to be protected from shock and/or the source, **characterized in that** said, or at least one of said support members (2, 3, 4, 5) is filled with rigid microgranules that are in contact in such a manner that the vibratory waves of the shocks and/or of the source are attenuated by the friction generated by the microgranules sliding over one another.

2. A structure according to claim 1, wherein a support member (4, 5) incorporating honeycomb cells filled with microgranules is mounted between a member (2) carrying a source of shock and a member (3) carrying an equipment unit to be protected from shock.

3. A structure according to claim 1, including the equipment unit (9, 9' or 9") to be protected from shock and/or a source (8) of shock mounted on the support member (7) also supporting the shock source whose cells are filled with microgranules.

4. A structure according to claim 1, wherein the honeycomb cellular support member (7A) includes cells filled with microgranules in one or more delimited areas each consisting of a main part where an equipment unit (9A) to be protected is mounted and a peripheral extension (11A) which borders the main part externally.

5. A structure according to claim 1, wherein the honeycomb cellular support member (7A) includes cells filled with microgranules in one or more delimited areas each consisting of a main part where a source (8B) of shock is mounted and a peripheral extension (12B) which borders the main part.

6. A structure according to any of claims 1 to 5, wherein the rigid microgranules filling the honeycomb cells have heterogeneous dimensional characteristics.

7. A structure according to any of claims 1 to 5, wherein the rigid microgranules filling the honeycomb cells are tightly packed and do not have any possibility of moving within the support element.

8. A structure according to any of claims 1 to 7, wherein the rigid microgranules filling the honeycomb cells are formed of hollow microspheres, possibly made of glass.
